# EUROPEAN PATENT APPLICATION

(11) **EP 2 143 523 A1**
(43) Date of publication of application: **13.01.2010**
(21) Application number: 09009008.5
(22) Date of filing: 10.07.2009
(51) Int. Cl.: B23Q 5/40, B23Q 11/12, B29C 43/00, B23D 23/00

(54) **Device for driving a movable slide in a metal hot pressing or bar shearing machine**

(30) Priority: 10.07.2008 IT MI20081254
(71) Applicant: FICEP S.P.A., 21045 Gazzada Schianno (VA) (IT)
(72) Inventor: Fongaro, Stefano, 21040 Castronno (IT); Papais, Cesare, 21040 Castronno (IT)
(74) Representative: Mayer, Hans Benno

(57) **Abstract**

A device or mechanism for driving a movable slide in a metal hot pressing or shearing machine, in which hot pressing, performing, extruding, flash pressing or flash less pressing processes are performed is herein disclosed. The top wall of the pressing machine comprises a casing closed at the bottom and top thereof by bottom and top closing covers, the casing including in its bottom and top portions strong bearings supporting a tubular body, which, through a ball recirculating system, is operatively connected to a movable (arrow f) piston, to said tubular body being operatively connected to a rotor including a plurality of electromagnets cooperating with an electric stator, to form an electric motor, between the outer side of the stator and the inner wall of the casing an annular chamber is formed therethrough a cooling fluid is conveyed.

## Description

### BACKGROUND OF THE INVENTION

The present invention rotates to a device or mechanism for driving a movable slide in a metal pressing or bar shearing machine, in which hot, cold pressing, performing, extruding or flash or flashless pressing processes are performed. Extruding pressing machines for plastically or permanently deforming or setting metal pieces are already known.

In the above pressing machines, the workpieces, made either of steel or of a like alloy, are deformed in suitable deforming tools to provide a finished piece. For performing the above deforming or setting operations vertical construction special pressing machines, in which a movable slide supports machining tools for either hot or cold deforming the workpiece are used.

In prior pressing machine, the slide raising and lowering movements are controlled performed by a hydraulic system, including a hydraulic control central unit and hydraulic cylinders coupled through resilient coupling pipes to hydraulic fluid pressurizing means, adapted to pressurize a hydraulic fluid, such as oil.

The use of oil, in a pressing machine of the above mentioned type, has the drawback that frequently leakages of said oil occur, with a consequent environmental pollution and a requirement of disposing of the used oil.

Moreover, the oil residue in the pressing machine pit can cause undesired fire events, in particular as workpieces heated to a temperature for example of 1,250°C are machined.

Further drawbacks of the prior hydraulic systems are their high servicing or maintenance costs, a difficult adjustment thereof, a poor workpieces locating precision, a high power consume and a high noise due to a continuously operating hydraulic pump.

### SUMMARY OF THE INVENTION

Accordingly, the aim of the invention is to overcome the above mentioned drawbacks of prior pressing machines, by providing a driving device or mechanism which does not comprise hydraulic cylinders for driving the movable pressing machine slide, while reducing the pressing machine assembling time, greatly simplifying the driving means constructions, reducing the servicing costs, power consumes, noise, improving the workpiece locating precision and providing motion kinematic and profile arrangements meeting all the technical requirements of the materials being machined.

According to the present invention, the above object is achieved by a device for driving a movable slide in a metal hot pressing or bar shearing machine, wherein the top wall of the pressing machine comprises a casing closed at a bottom and top thereof by closing covers, wherein said casing comprises inner bottom and top high strength bearings supporting a tubular body, which, through a ball recirculating system, is operatively connected to a movable piston (arrow f), wherein to said tubular body is operatively connected a rotor including a plurality of electromagnets cooperating with an electric stator thereby forming an electric motor, and wherein between an outer side of said stator and an inner wall of the casing an annular chamber therethrough a cooling fluid is conveyed is formed.

Further characteristics of the invention will become more apparent from the dependent claims, following disclosure and drawings.

### BRIEF DESCRIPTION OF THE DRAWINGS

The subject matter of the present invention will be hereinafter disclosed in a more detailed manner with reference to an embodiment thereof, given only by way of an example and being shown in the accompanying drawings, where:
Figure 1 shows a device or mechanism for driving a movable slide of a pressing machine of the above mentioned type;
Figure 2 shows the driving device or mechanism with two auxiliary driving units; and
Figure 3 shows a device or mechanism for locking a workpiece in the pressing machine.

### DESCRIPTION OF THE PREFERRED EMBODIMENTS

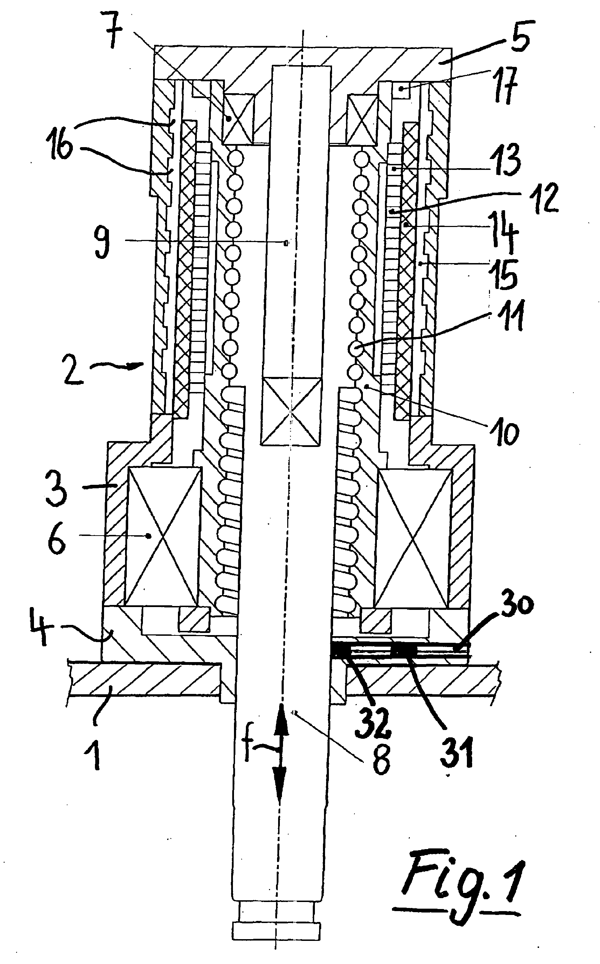

As shown in figure 1, the top wall 1 of a pressing machine (not shown) supports a driving device or mechanism, generally indicated by 2, and comprising a casing 3 closed at the bottom thereof by a bottom closing cover 4 and the top thereof by a top closing cover 5.

At the bottom thereof, said casing houses a strong bearing 6 whereas said top cover 5 supports a corresponding top bearing 7. The bottom cover 4 and top cover 5 operate as support members for a movable piston 8, as shown by the double arrow (f).

The piston 8 is operatively coupled to the upward and downward movable slide (not shown) of the pressing machine. Advantageously, the piston 8 forming body comprises a flat surface 9 operating as an antirotary system which may have a splined contour, or comprise a ball recirculating system.

The piston 8 is encompassed by a tubular body 10 which, through a ball recirculating system 11, is operatively coupled to said piston 8.

The top portion of the tubular body 10 is operatively coupled to a rotor 12 including a plurality of magnets 13.

The magnets 13 of the rotor 12 cooperate with a stator 14 thereby forming, in said casing 2, an electric motor.

The drawings do not show the electric conductors for supplying the stator 14 with an electric current.

Advantageously, the piston forming elements 30, 31, 32 also form a built-in safety brake which can be electrically, pneumatically or hydraulically controlled, to provide safe rest and braking conditions.

Between the body of the casing 3 and electric stator 14 is formed an annular chamber 15 to which is conveyed a refrigerating fluid to remove heat generated by the motor assembly including said rotor 12 and stator 14.

To improve the refrigerating or cooling efficiency, the inner wall of the casing 3 comprises a plurality of circumferential refrigerating slots 16.

The top end portion of the tubular body 10 supports an encoder 17 or the like detecting means operatively coupled to the pressing machine numerical control unit.

Thus, by said encoder 17 it is possible to detect, through the rotary movement of the tubular body 10, the distance from the piston 8 to the top wall 1 of the pressing machine.

In this connection it should be apparent that the above disclosed assembly can be advantageously inclined in a prior construction made and sold by the Applicant and including auxiliary axes for performing hot cutting or shearing operations; that is a bar locking pressing element, a squarely cutting device for locking the workpiece length downstream of the axis and a gauge for measuring the bar length downstream of the cutting or shearing axis.

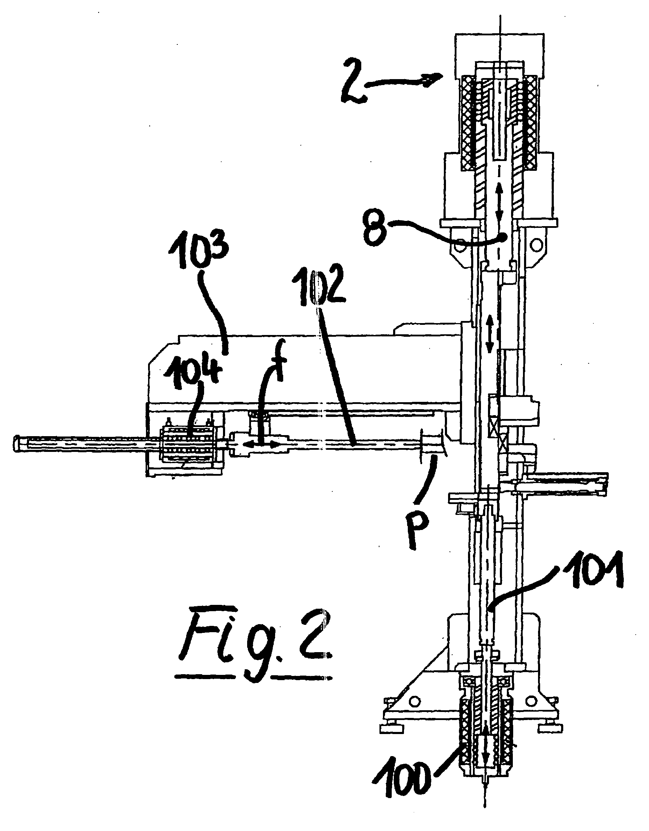

As shown in figure 2, at a position opposite to that of the piston 8 in said casing 2, a further device 100 for upward and downward driving a respective further piston 101 is provided. Thus, by driving said pistons 8 and 101 by synchronous movements, it is possible to prevent the piston 8 from abruptedly impacting the pressing machine structure, since the operating impacts are transmitted by said piston 8, balanced by the piston 101 driven by the device 100.

Moreover, to precisely define the shearing length of the workpiece P to be sheared, on a side of the pressing machine, a movable rod 102 supported by a cantilever supporting arm 103 is provided.

The movable rod 102 can be driven, as shown by the arrow (f) by a driving mechanism 104, controlled by the pressing machine numerical control unit.

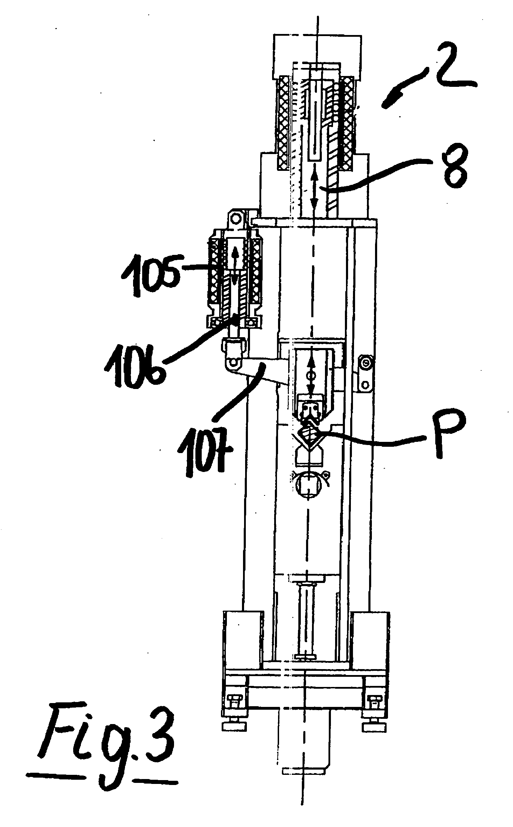

Figure 3 further shows a device 105 for driving a stem 106 operating a locking device 107 for locking the workpiece P inside the pressing machine, thereby preventing the workpiece from being undesirably displaced during the cutting or shearing operations.

## Claims

1. A device for driving a movable slide in a metal hot pressing or bar shearing machine, **characterized in that** said device comprises a casing (3) supported on a top wall (1) of the pressing machine, said casing (3) being closed at a bottom and top thereof by bottom and top closing covers (4, 5), **that** said casing (3) comprises inner bottom and top high strength bearings (6, 7) supporting a tubular body (10) which, through a ball recirculating system (11), is operatively connected to a movable piston (8) (arrow f), **that** to said tubular body (10) is operatively connected a rotor (10) including a plurality of electromagnets (13) cooperating with an electric stator (14) and **that** between an outer side of said stator (14) and an inner wall of said casing (3) an annular chamber (15) is formed, therethrough a cooling fluid is conveyed.

2. A device for driving a movable slide in a metal hot pressing or bar shearing machine, according to claim 1, **characterized in that** to said tubular body (10) is operatively connected an encoder (17) or the like detecting system in turn operatively connected to a pressing machine numerical control unit.

3. A device for driving a movable slide in a metal hot pressing or bar shearing machine, according to claim 1, **characterized in that** said device comprises a built-in antirotary system (9).

4. A device for driving a movable slide in a metal hot pressing or bar shearing machine, according to claim 1, **characterized in that** said device comprises a built-in safety brake (30, 31, 32).

5. A device for driving a movable slide in a metal hot pressing or bar shearing machine, according to claim 1, **characterized in that** said inner wall of said casing (3) comprises circumferential refrigerating slots (16).

6. A device for driving a movable slide in a metal hot pressing or bar shearing machine, according to claim 1, **characterized in that** said device further comprises, oppositely arranged from said piston (8), a further piston (101) driven by a driving device (100), and **that** both said piston (8) and said further piston (101) are synchronously actuated.

7. A driving device, according to claim 1, **characterized in that** said pressing machine comprises a cantilever arm (103) controllably movably supporting a piston (102) having an end portion operating as an abulment for a workpiece (P) and **that** said piston (102) can be driven along the cantilever arm by a driving mechanism (104).
